# DEMANDE DE BREVET EUROPEEN

(11) **EP 0 987 234 A1**
(43) Date de publication de la demande: **22.03.2000**
(21) Numéro de dépôt: 99470019.3
(22) Date de dépôt: 15.09.1999
(51) Int. Cl.: C05F 3/00, B01D 35/20

(54) **Procédé de traitement de résidus biologiques et séparateur de phase pour la mise en ouvre de ce procédé**

(30) Priorité: 16.09.1998 FR 9811718
(71) Demandeur: Agri Protech, 29870 Lannilis (FR)
(72) Inventeur: Guillerm, François, 29400 Lampaul-Guimiliau (FR)
(74) Mandataire: Poupon, Michel

(57) **Abrégé**

La présente invention se rapporte à un procédé de traitement de résidus biologiques, tels que les déjections, les litières, les fumiers, les lisiers ou autres, caractérisé en ce qu'il comporte successivement les étapes de :
(10) - introduction régulière d'un produit bactérien comprenant une ou plusieurs bactéries, dans les résidus biologiques, sur le site d'élevage, afin de former un mélange (11);
(20) - traitement des résidus biologiques par ledit produit bactérien ;
(30) - tamisage en douceur du mélange et séparation du mélange en une phase solide (31) et une phase liquide (32); et
(40) - compostage de la phase solide (31) en un compost inodore.

La présente invention se rapporte également à un séparateur de phase (330) du type comportant un châssis vibrant pour la mise en oeuvre du procédé de traitement selon l'invention et pouvant être utilisé pour d'autres procédés, caractérisé en ce qu'il comporte deux tamis inclinés, un tamis supérieur, et un tamis inférieur plus fin que le tamis supérieur disposés l'un au-dessus de l'autre sur le châssis vibrant.

## Description

La présente invention se rapporte à un procédé de traitement de résidus biologique tels que les déjections, les litières, les fumiers, les lisiers ou autres ainsi qu'à un séparateur de phase pour la mise en oeuvre du procédé de traitement selon l'invention pouvant être utilisé pour d'autres procédés.

L'industrie de l'élevage produit énormément de résidus biologiques, et les méthodes naturelles d'élimination de ces résidus telles que l'épandage ou l'enfouissage ne suffisent plus.

L'art antérieur connaît déjà des procédés de traitement de résidus biologiques tels que les déjections, les litières, les fumiers, les lisiers ou autres.

L'art antérieur connaît en particulier le procédé présenté dans la demande de brevet internationale WO 95 / 21140.

Ce procédé est basé sur une succession de quatre étapes: une première étape de séparation des effluents en une fraction liquide et une fraction solide, la fraction solide étant asséchée afin de fournir un fertilisant solide, puis une deuxième étape de décomposition biochimique de la fraction liquide, puis une troisième étape de sédimentation de la fraction liquide afin d'obtenir un surnageant, une phase sédimentée et entre ces deux phases une phase aqueuse et une quatrième étape de séparation de la phase aqueuse afin de produire de l'eau purifiée et un concentré.

L'inconvénient majeur de ce procédé est qu'il fournit d'une part une fraction solide qui ne composte pas bien et dégage des odeurs de putréfaction et d'autre part de l'eau purifiée alors que cela n'est en réalité pas nécessaire.

En effet, la solution de l'épandage n'est pas mauvaise en elle-même, à condition que le liquide épandu contienne des éléments azotés et phosphorés en proportions raisonnables.

Des solutions ont également été cherchées de manière à éliminer chimiquement ou biologiquement les composants les plus polluants de ces résidus, c'est-à-dire notamment l'azote et le phosphore.

Le brevet européen N° 720 974 présente à ce titre un complexe bactérien comprenant cinq lactobacilles et quatre bacillus, tous non pathogènes, capables d'une part de réorganiser l'azote en utilisant de l'azote de type ammoniacal pour produire des protéines bactériennes endo et exo cellulaires et, d'autre part de contrôler la fermentation pour bloquer la production de gaz putrides.

Le procédé selon l'invention présente toutes les étapes nécessaires à la mise en oeuvre du complexe bactérien.

Le procédé selon l'invention a été mis au point pour le complexe bactérien présenté dans le brevet européen N° 720 974 et pour le traitement du lisier de porc mais il peut être étendu à d'autres produits bactériens équivalents comprenant une ou plusieurs bactéries et pour le traitement d'autres résidus biologiques tels que les déjections, les litières, les fumiers, ou autres, sans nécessairement faire oeuvre d'activité inventive.

Le procédé selon l'invention est remarquable en ce qu'il comporte quatre étapes principales et une étape optionnelle :
- une étape d'introduction régulière du produit bactérien dans les résidus biologiques, sur le site d'élevage même,
- une étape de dégradation des résidus biologiques et de réorganisation des substances polluantes grâce à l'action du produit bactérien, puis
- une étape de tamisage en douceur et de séparation des phases liquides et solides du mélange avec un séparateur de phase d'un type particulier, puis
- une étape de compostage de la phase solide en un compost inodore, et éventuellement,
- une étape de décantation de la phase liquide dont le décantât solide peut être composté et le jus de décantation peut être traité ou épandu.

En effet, les protéines produites par le complexe bactérien, bien que de poids moléculaire moyen, sont insolubles et elles peuvent être récupérées grâce à la mise en oeuvre de moyens physiques adaptés pendant l'étape de tamisage.

La récupération des éléments figurés présents dans le lisier peut être effectuée par un tamisage doux qui respecte la structure spatiale des molécules.

C'est pour cette raison que le demandeur a mis au point un séparateur de phase à tamis vibrant à double plateau.

Ce séparateur de phase peut d'ailleurs être utilisé à d'autres fins que le tamisage de résidus biologiques ayant subi un traitement par un produit bactérien. Il peut être utilisé dès qu'il est nécessaire d'opérer un tamisage doux préservant la structure spatiale des molécules.

Dans le cas du traitement du lisier de porc par exemple, la taille des trous des tamis est de l'ordre de 400 µm puis 100 µm de façon à ne laisser passer que les particules d'un diamètre effectivement inférieur.

Par contre, pour le traitement des fumiers de vache, les tamis seront certainement moins fins.

Dans le cas du traitement du lisier, le liquide résultant du tamisage a une matière sèche qui est fonction de celle du lisier avant tamisage.

La fraction protéique de taille inférieure à 100µ représente environ 60 % de la totalité de la matière en suspension en période hivernale alors que du fait d'une activité bactérienne plus intense cette fraction protéique ne représente plus que 40 à 50% de la matière sèche initiale en période estivale.

Le liquide en sorti de tamis se trouve donc débarrassé des éléments grossiers présentant une faible densité. Ces éléments permettent également par l'intermédiaire des différentes liaisons physico-chimiques, l'obtention d'un réseau empêchant la précipitation de la majeure partie des éléments à plus forte densité.

Des essais comparatifs menés conjointement sur des lisiers non traités et des lisiers traités ont permis de vérifier qu'en l'absence de traitement avec le complexe bactérien le liquide issu du tamisage ne décante pas même après plusieurs jours.

Par contre, après tamisage, le liquide issu du tamisage d'un lisier traité avec le complexe bactérien décante très rapidement puisque l'on obtient en moins de 24 heures une matière sèche résiduelle inférieure à 1%.

Des essais ont montré que les décanteurs linéaires étaient beaucoup mieux adaptés pour traiter ce genre de produit que les décanteurs verticaux. Cependant, derrière un décanteur plat, il peut être envisagé un décanteur conique axial pour entraîner la précipitation des éléments figurés résiduels.

La mise en oeuvre des différentes phases du procédé conduit à l'obtention d'un jus de décantation ayant perdu plus de 85% de sa matière sèche initiale.

Le volume de liquide se trouve ainsi diminué de 36% au minimum et le volume des boues extraites après décantation représente 22,3% du liquide à l'entrée du décanteur, comme illustré page 7.

En période hivernale, le jus de décantation contient moins de 39% de l'azote initial, comme illustré page 8, et l'azote organique (de type protéique) est éliminé à plus de 86%, ce qui démontre bien l'ampleur de la modification de structure des éléments contenant de l'azote.

Les essais faits sur un lisier non traité mettent en évidence que, même avec des matières sèches beaucoup plus élevées, l'épuration de l'azote organique est inférieure à 60%.

Ce jus très peu chargé en matière organique ne diffuse plus d'odeur désagréable et peut être aisément stocké dans une fosse en vue de l'épandage.

Il est également possible d'envisager la reprise de ce jus pour un traitement plus complet de l'azote.

Le phosphore est également un élément dont il convient de se débarrasser pour éviter les risques d'eutrophisation des cours d'eau. Les résultats illustrés ci-après page 9 mettent parfaitement en lumière l'incidence prépondérante de la décantation pour un lisier traité.

En effet, si après tamisage, il reste 75% du phosphore initial dans la phase liquide, après décantation, le liquide ne contient plus qu'au maximum 10% du phosphore initial.

En ce qui concerne les lisiers non traités par un produit bactérien, cette élimination est au maximum de 55%.

Si la potasse n'est pas considérée comme un produit dont les excès constituent un risque important, sa concentration dans les lisiers de porcs est souvent très importante et il est donc intéressant de pouvoir en éliminer de la phase liquide.

Après décantation, la quantité de potasse ne se trouve plus dans le liquide résiduel qu'à un maximum de 60% par rapport aux quantités initiales, comme illustré page 10.

La fraction solide obtenue après tamisage composte sans difficulté à condition qu'un taux de matière sèche minimum de 12% soit respecté.

L'utilisation du produit bactérien permet d'améliorer le principe de compostage.

Le complexe bactérien présenté dans le brevet européen N° 720 974 est un système bactérien aérobie - anaérobie facultatif. Il est donc inutile lorsqu'on utilise ce dernier de procéder à des retournements successifs de la fraction solide pour obtenir un compostage de bonne qualité.

Cette propriété assure un bon respect de l'environnement car le non-retournement des tas pendant la phase de compostage permet d'éviter les dégagements gazeux au moment de la destruction des andains et la libération de gaz nauséabonds.

Le traitement des boues de décantation s'avère plus difficile car celles-ci ont un taux initial de matière sèche faible (environ 7%) incompatible avec une mise en compostage en l'état. Cependant, les taux de matière organique et d'azote sont compatibles avec un compostage à condition de remonter le taux de matière sèche autour de 15%.

On peut alors, soit mélanger les boues de décantation à la phase solide en cours de compostage, soit assécher les boues et les incorporer ultérieurement au compost.

Tant la phase solide que les boues de décantation ne génèrent d'odeurs pouvant nuire à la qualité de l'environnement.

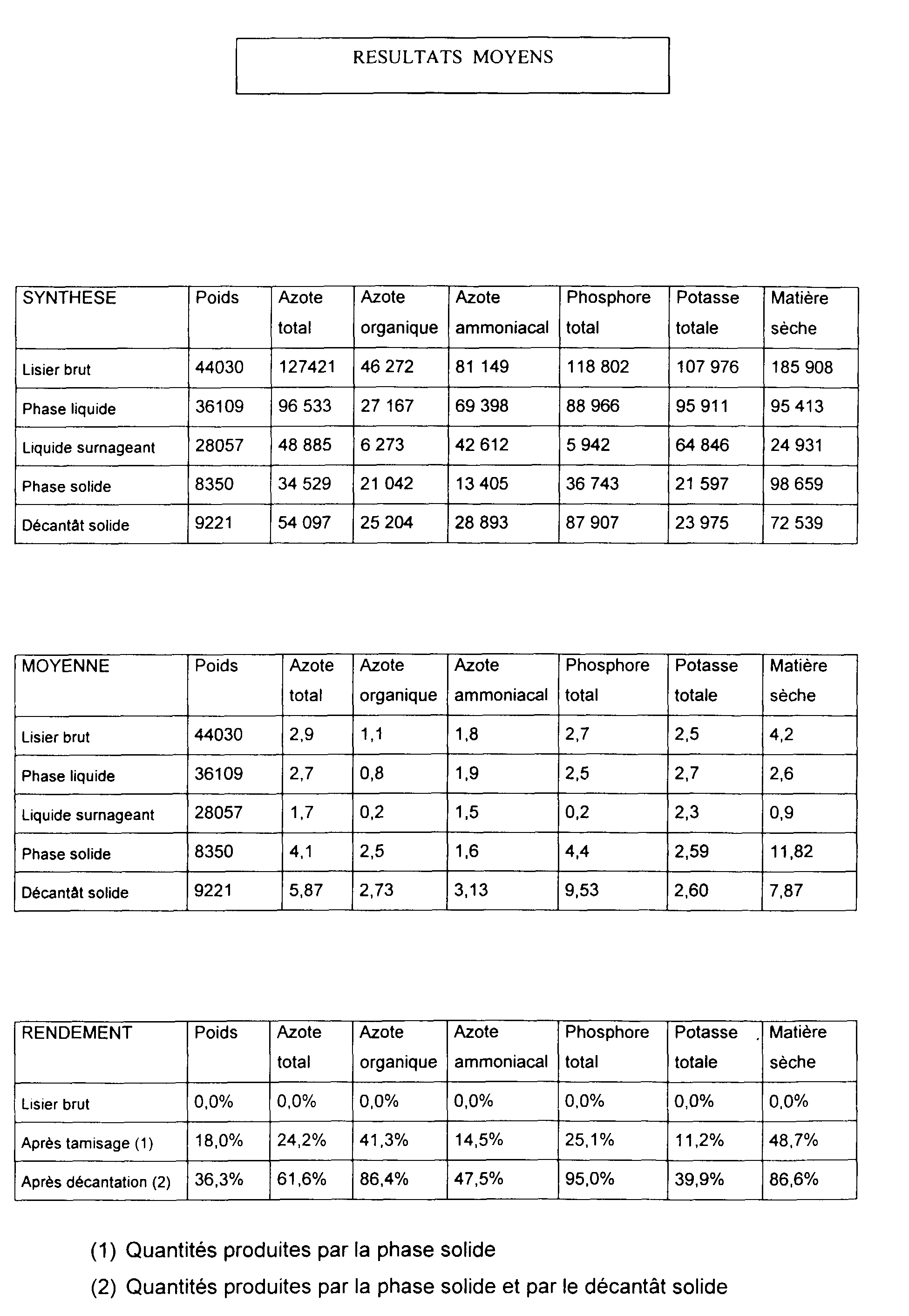

Ainsi, pour 1m³ de lisier, quelle que soit sa teneur initiale en N, P, K, on obtient au maximum :
- après séparation de phase ;
*

| | |
|---|---|
| 0,82 m³ de fraction liquide contenant | 2,7 U N / m³ |
| | 2,5 U P / m³ |
| | 2,0 U K / m³ |

* 0,18 m³ de fraction solide compostée puis exportée, c'est-à-dire transporté et utilisé dans une zone moins sensible à l'épandage et à l'enfouissage ou mis en valeur.
Cette exportation permet de réduire de 45% la surface du plan d'épandage nécessaire.
- après séparation de phase et décantation :
*

| | |
|---|---|
| 0,64 m³ de fraction liquide contenant : | 0,8 U N/ m³ |
| | 0,2 U P/ m³ |
| | 2,3 U K/m³ |

* 0,36 m³ de fraction solide et décantât, composté puis exporté.

Cette exportation permet de réduire de 70% la surface du plan d'épandage nécessaire.

D'autres avantages ressortiront de la description faite ci-après de l'invention à titre purement explicatif en référence aux figures annexées :
- la figure 1 illustre un schéma séquentiel du procédé selon l'invention,
- la figure 2 illustre un schéma du dispositif réalisant la mise en oeuvre du procédé selon l'invention,
- la figure 3 illustre une vue de côté du séparateur de phase selon l'invention,
- la figure 4 illustre une vue arrière du séparateur de phase selon l'invention sans le muret ni le vibrateur,
- la figure 5 illustre un exemple de dispositif de fixation des cadres des tamis au châssis vibrant par des glissières, et
- la figure 6 illustre une vue en coupe d'un répartiteur de liquide.

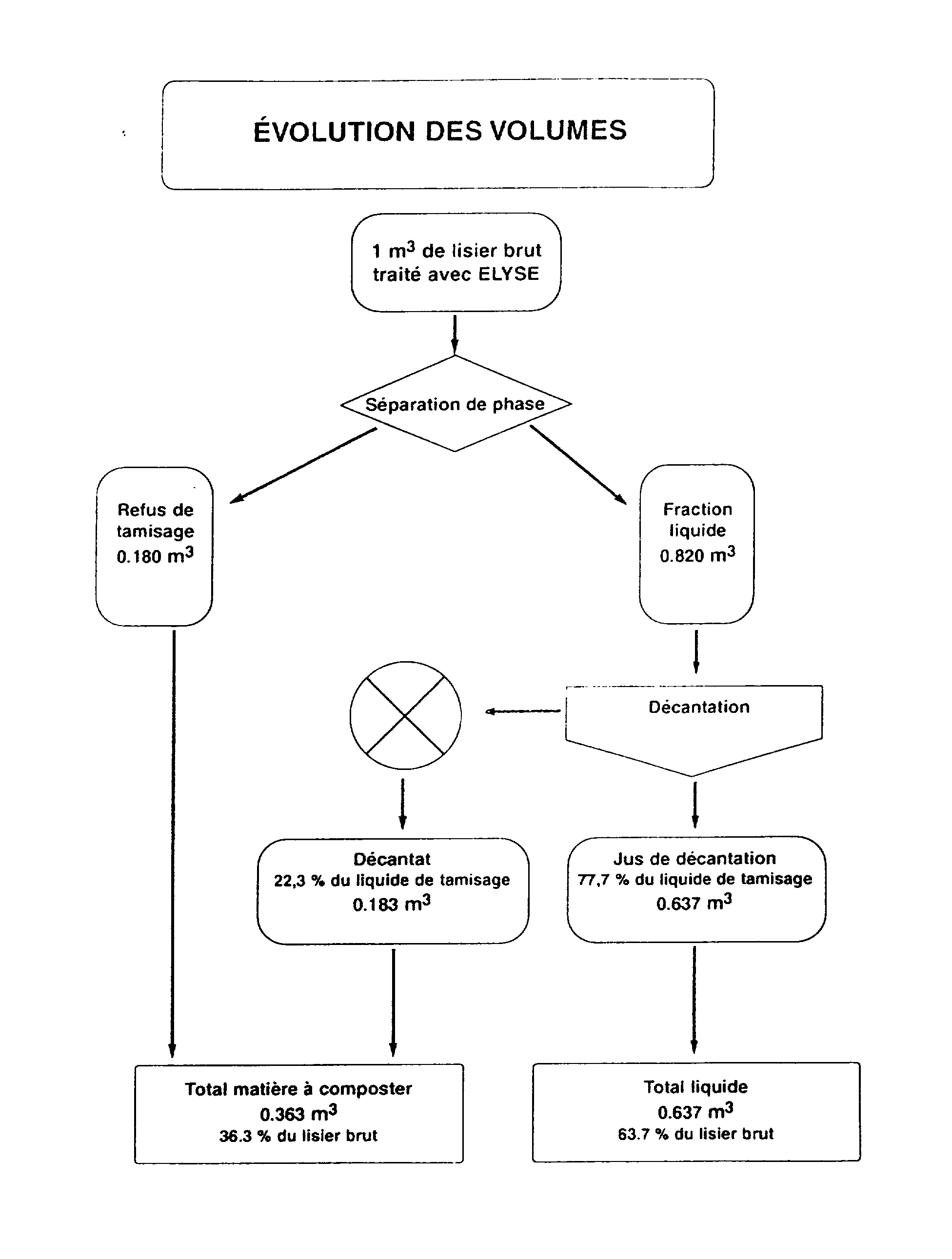

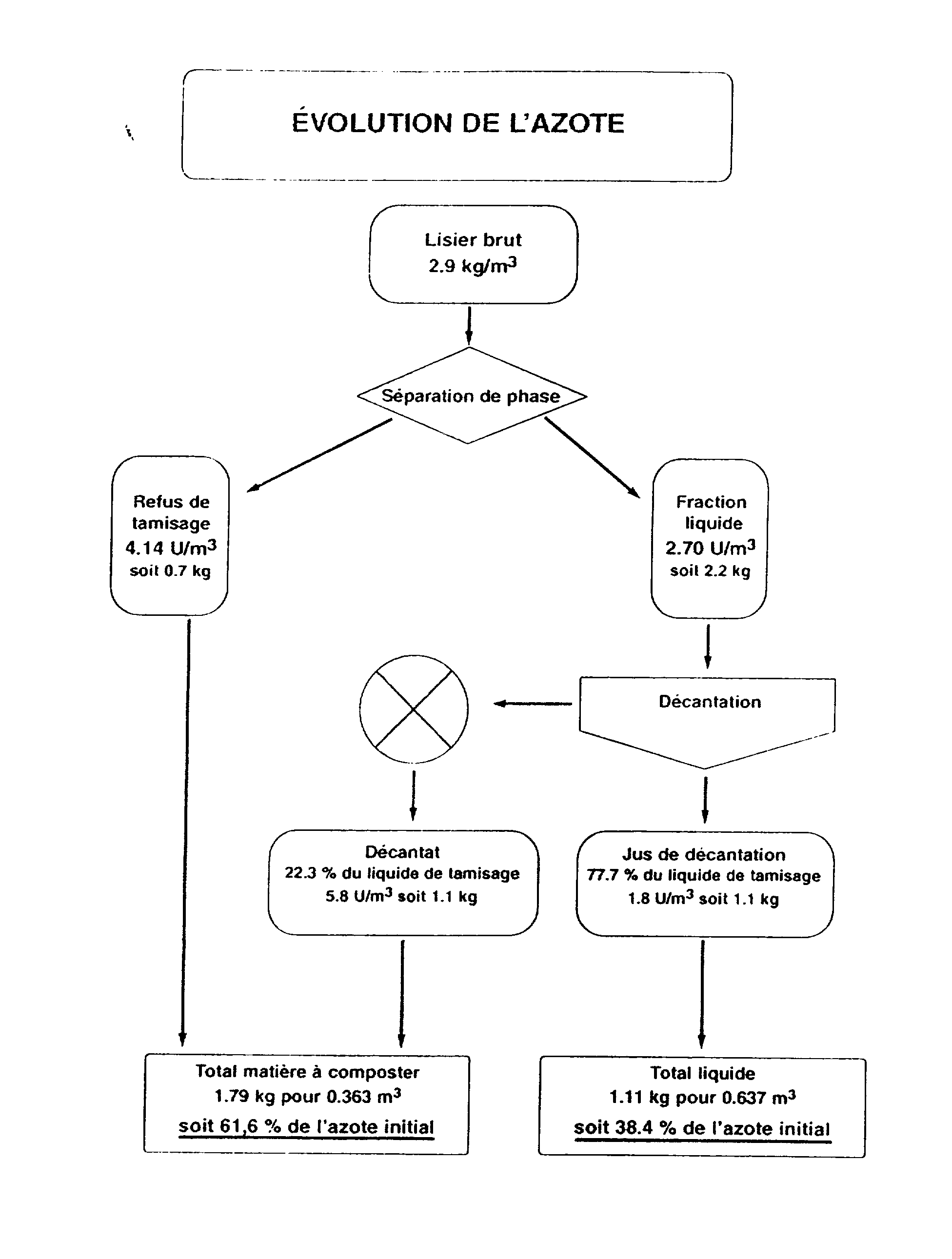

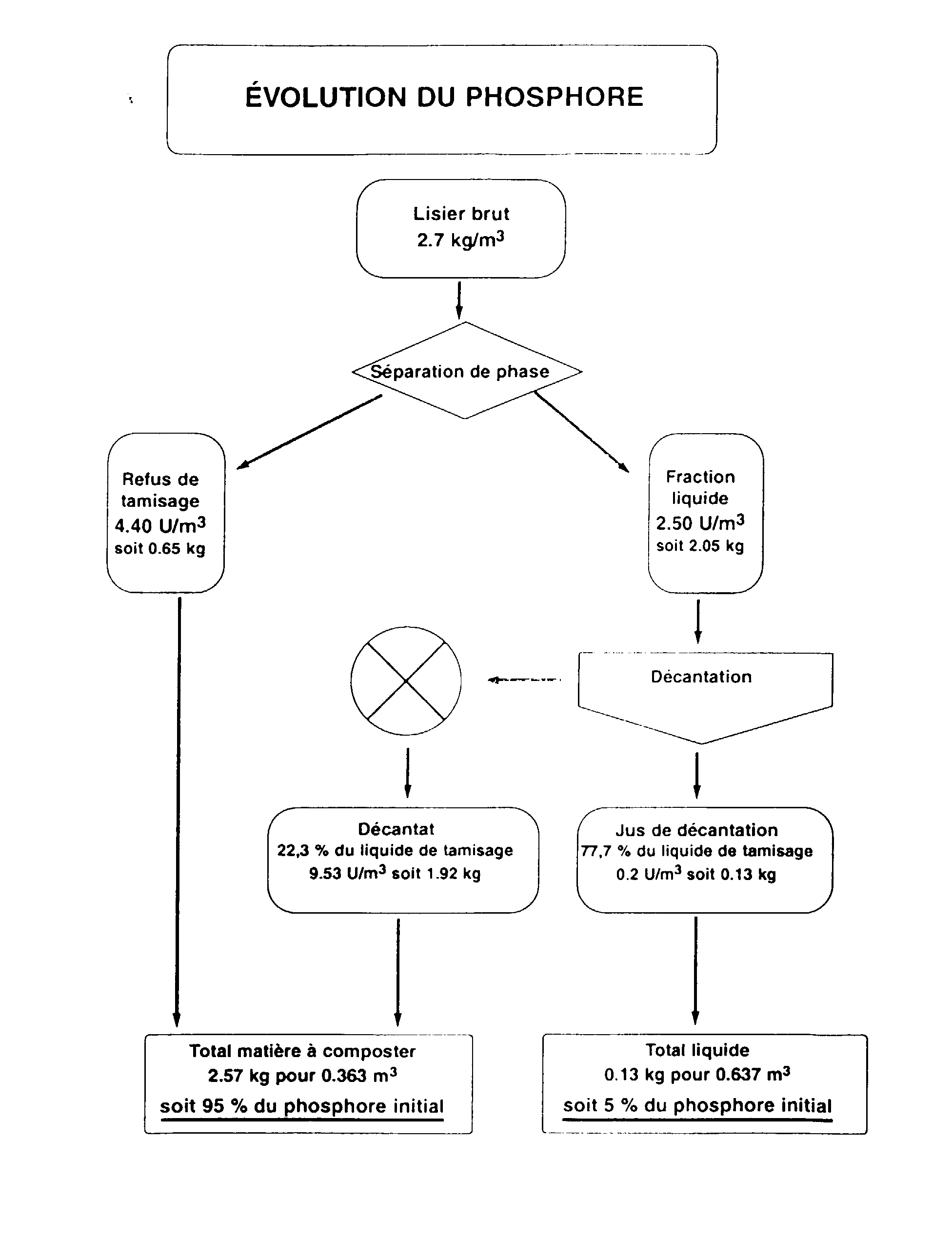

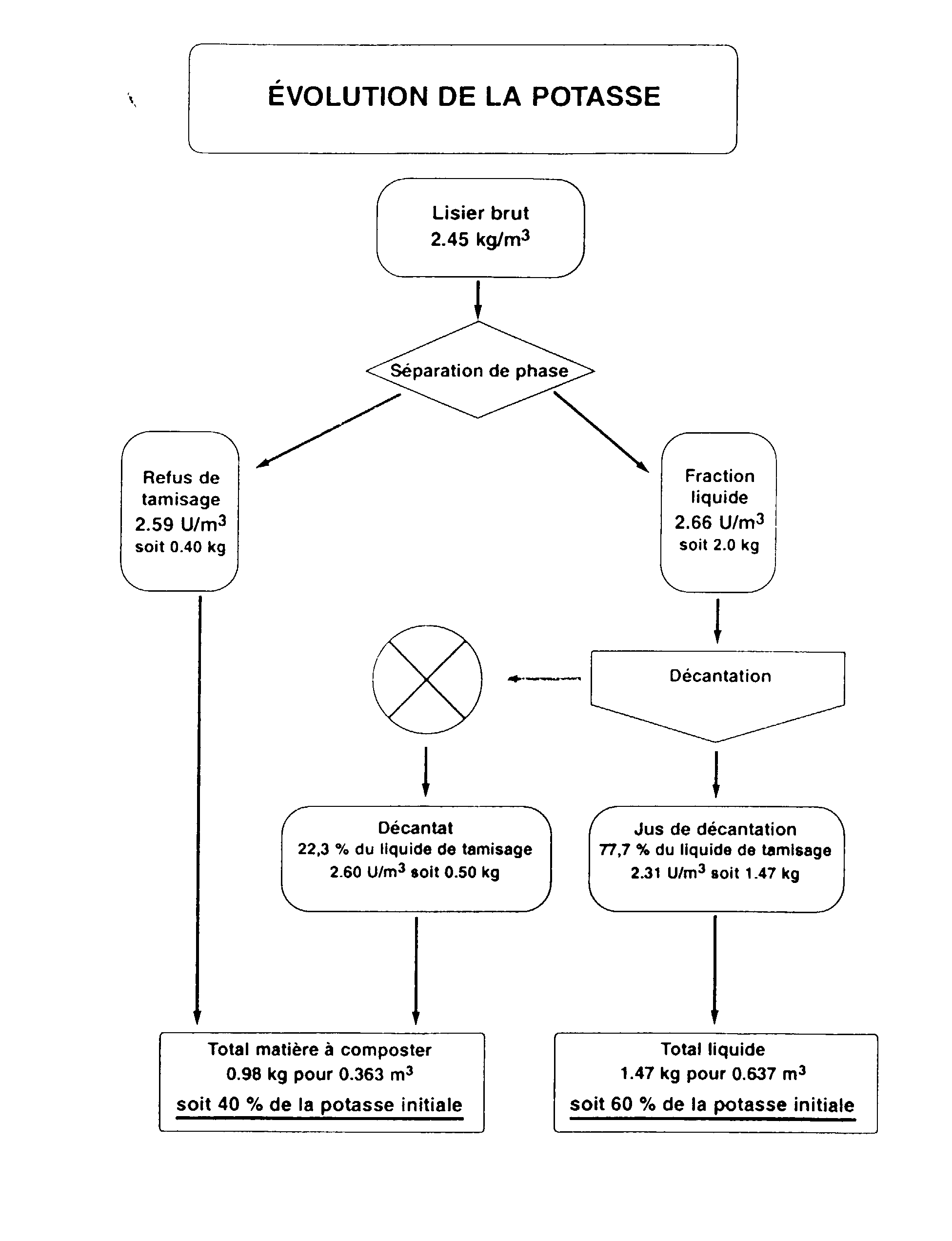

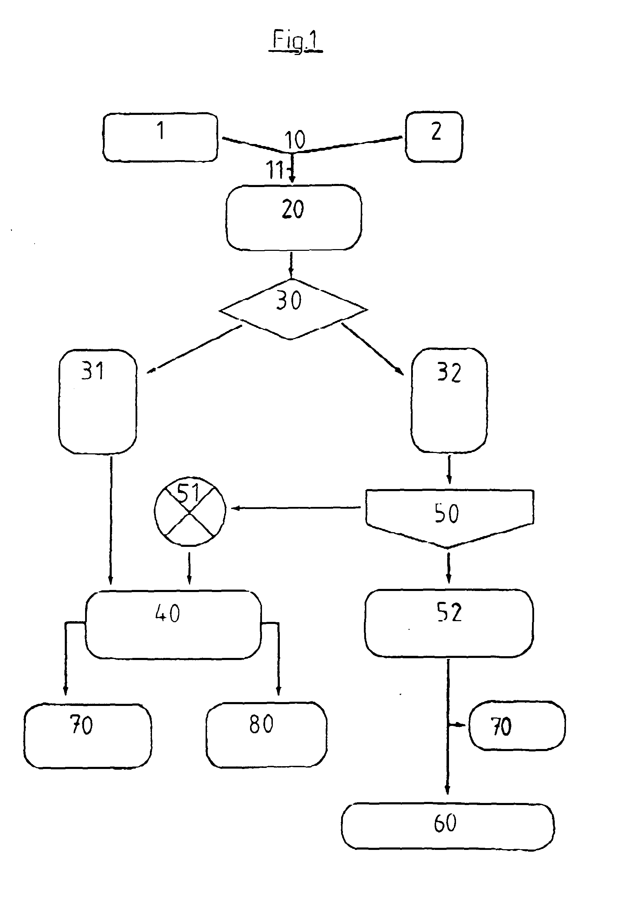

Le procédé selon l'invention, illustré figure 1, est un procédé de traitement de résidus biologiques (1) tels que les déjections, les litières, les fumiers, les lisiers ou autres, caractérisé en ce qu'il comporte successivement les étapes de :
(10) - introduction régulière d'un produit bactérien (2) comprenant une ou plusieurs bactéries, dans les résidus biologiques (1), sur le site d'élevage, afin de former un mélange (11);
(20) - traitement des résidus biologiques (1) par ledit produit bactérien (2) ;
(30) - tamisage en douceur du mélange (11) et séparation du mélange (11) en une phase solide (31) et une phase liquide (32) ; et
(40) - compostage de la phase solide (31) en un compost inodore.

Le procédé peut en outre comporter une étape (50) de décantation rapide de la phase liquide (32) en un décantât solide (51) qui peut être composté et un jus de décantation (52), et une étape (60) de traitement complémentaire du jus de décantation (52) par osmose inverse ou biologique.

Pour une meilleure efficacité du produit bactérien, il est conseillé d'opérer l'étape (10) d'introduction du produit bactérien (2) dans les résidus biologiques (1) environ une fois par semaine afin de limiter la libération de certaines molécules sous l'action de la flore incontrôlée véhiculée par l'air.

Le produit bactérien (2) ne doit pas être pathogène, du fait de sa présence sur le site d'élevage.

La dose recommandée dans le cas d'un traitement avec le complexe bactérien présenté dans le brevet européen N° 720 974 est de l'ordre de 15 g par mètre carré de caillebotis et par semaine dans les sites d'élevage.

L'étape (40) de compostage opérée dans l'unité de traitement présente une durée de 8 à 12 semaines. Les meilleurs résultats étant obtenus pour une durée de 60 jours.

Ensuite, le compost issu de l'étape (40) de compostage peut subir soit une étape (70) d'épandage, soit une étape (80) d'export, c'est-à-dire de transport vers un centre de valorisation qui peut l'utiliser immédiatement pour amender le sol ou l'emballer pour permettre sa distribution.

Cette étape (80) d'export est facilitée par le fait, d'une part que le compost est inodore et, d'autre part, que seule la matière sèche utile est transportée, diminuant d'autant les coûts.

Le jus de décantation (52) peut subir soit une étape (60) de traitement complémentaire visant à le valoriser, soit une étape (70) d'épandage.

Le procédé selon l'invention est particulièrement performant.

En effet, si on considère le cas d'un élevage porcin comprenant 250 truies, trois cycles de travail d'environ 121 jours chacun seront suffisants pour traiter les 4 900 m³ de lisier produits dans l'année.

Chaque cycle comprend alors environ :
- 46 jours de tamisage à raison de 12 heures de fonctionnement du séparateur de phase par jour, le séparateur ayant un débit d'entrée d'environ 3 m³/heure,
- 60 jours de compostage et,
- 15 jours disponibles pour le transfert du compost, le nettoyage...

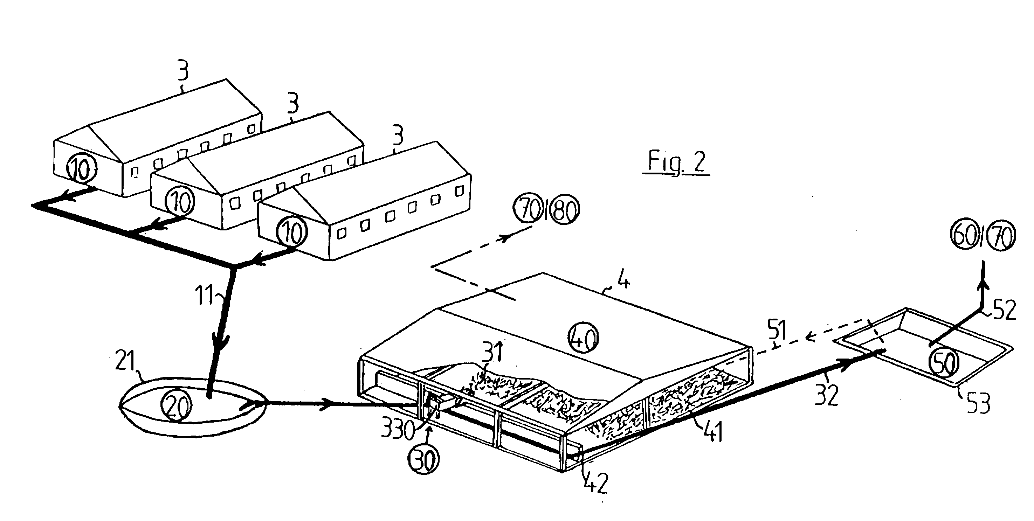

Le dispositif réalisant la mise en oeuvre du procédé selon l'invention, illustré figure 2, comporte :
- un ou plusieurs bâtiments (3) où est opérée régulièrement l'étape (10) d'introduction du produit bactérien (2) dans les résidus biologiques (1),
- une fosse de traitement (21), pour opérer l'étape (20) de traitement des résidus biologiques (1) du mélange (11) par le produit bactérien (2),
- un séparateur de phase (330) monté sur un châssis (340) pour la réalisation de l'étape (30) de tamisage en douceur et de séparation de phase,
- une pompe (350) chargée d'approvisionner le séparateur de phase en mélange (11) et
- une unité de traitement (4) comportant une aire de compostage (41) de préférence couverte pour la réalisation de l'étape (40) de compostage.

Dans le cas où l'on choisit d'opérer également l'étape (50) de décantation de la fraction liquide (32), il est nécessaire de prévoir aussi une fosse de décantation (53).

Les fosses de traitement (31) et de décantation (53) ainsi que l'aire de compostage (41) peuvent être réalisées en béton.

Le mélange (11) n'étant pas homogène, il est préférable de prévoir une pompe à variation de vitesse par convertisseur de fréquence pour aspirer le mélange (11).

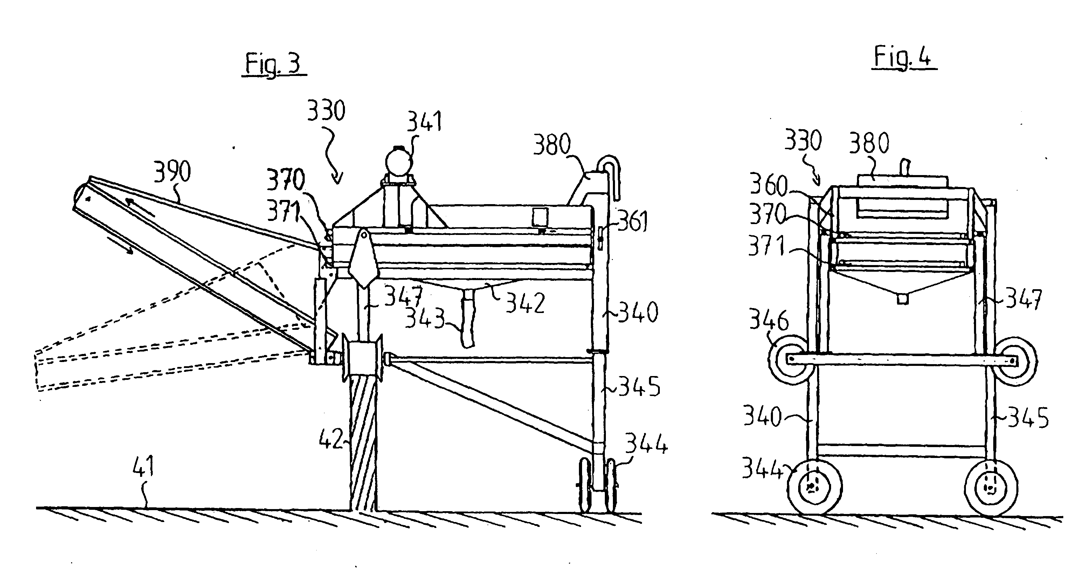

Le séparateur de phase (330) selon l'invention, illustré figures 3 et 4, est du type comportant un vibrateur (341) fixé sur le châssis (340) chargé de faire vibrer le châssis vibrant (360).

Le vibrateur (341) peut, par exemple, être muni de deux moteurs à balourd, positionnés inversés, de manière à annuler les contraintes latérales.

Le séparateur de phase (330) selon l'invention est caractérisé en ce qu'il comporte deux tamis inclinés de quelques degrés (2 à 5°), un tamis supérieur (370), et un tamis inférieur (371) plus fin que le tamis supérieur (370) disposés l'un au-dessus de l'autre sur le châssis vibrant (360).

Le châssis vibrant (360) du séparateur de phase (330) comporte en outre des fentes (361) pour permettre de régler l'inclinaison des tamis (370,371).

De préférence, dans le cas du traitement du lisier de porc, le tamis supérieur (370) retient toutes les particules dont la taille est supérieure à 400 µm, et le tamis inférieur (371) retient toutes les particules dont la taille est supérieure à 100 µm.

Chacun des tamis est disposé sur un raidisseur (372) constitué d'une tôle régulièrement perforée, et l'ensemble est monté sur un cadre (373).

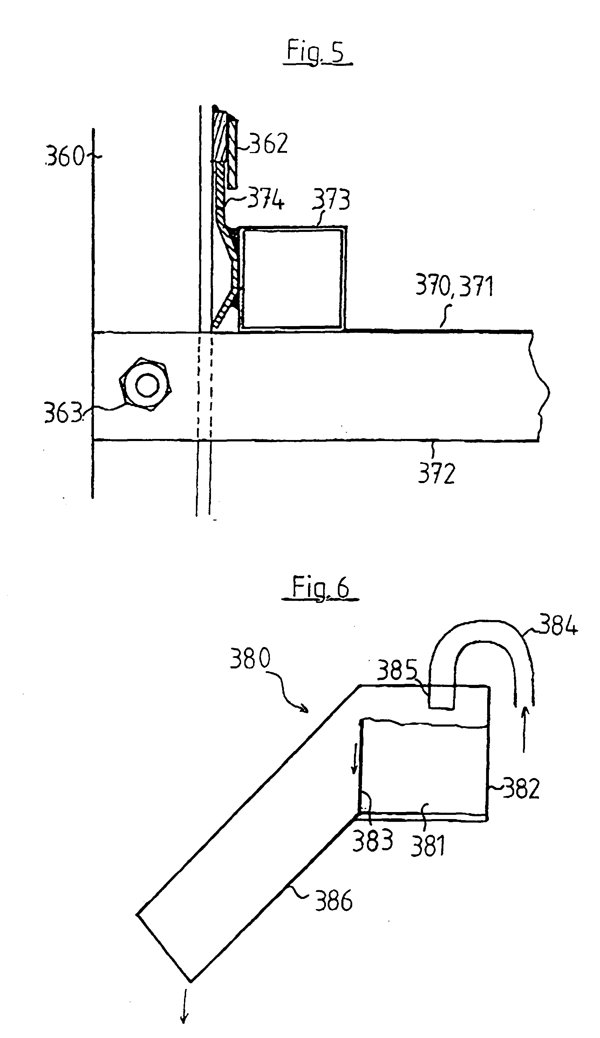

Les tamis devant être retirés régulièrement du châssis vibrant (360) afin de procéder à leur nettoyage et à leur changement, chaque cadre (373) est maintenu au châssis vibrant (360) d'une part par deux rails (374) coulissant dans deux glissières (362) et d'autre part par deux vis (363) situées aux extrémités arrières, comme illustré figure 5.

Pour favoriser la transmission des vibrations, la taille des glissières (362) diminue de l'arrière vers l'avant. Les glissières (362) maintiennent ainsi fermement les rails (374).

Dans une version préférée de l'invention, le séparateur de phase (330) est également muni d'un répartiteur (380), illustré figure 6, chargé de répartir le mélange (11) véhiculé par la pompe (350) sur le tamis supérieur (370).

Pour ce faire, le répartiteur est muni d'un caniveau (381) délimité d'une part par la paroi du répartiteur (382) et d'autre part par un rebord (383).

Ainsi, le mélange (11) aspiré par la pompe dans la canalisation et refoulé dans le tuyau d'alimentation (384) se déverse par l'intermédiaire de la bouche (385) dans le caniveau (381). Lorsque le caniveau est plein, le mélange déborde au-dessus du rebord, se répartit sur le plan incliné (386) et se déverse doucement sur toute la largeur du tamis supérieur (370).

La phase liquide (32) filtrée par les tamis est ensuite collectée dans un bac collecteur (342) et évacué par un tuyau d'évacuation (343) vers la fosse de décantation (53).

La phase solide (31) est récoltée dans la partie basse des tamis et est évacuée par un convoyeur à bande (390) vers l'aire de compostage (41).

Le convoyeur à bande (390) est solidaire du châssis (340) du séparateur de phase (330) mais peut être déplacé par rotation, comme illustré en pointillé figure 3, afin de permettre la libération des tamis (370,371) pour le nettoyage ou le changement.

Selon une version préférée de l'invention, le séparateur de phase (330) comporte des moyens permettant de le déplacer le long d'un muret (42) séparant la zone où est opérée la phase de traitement de l'aire de compostage, comme illustré figure 4.

Le châssis (340) du séparateur de phase est mobile suivant le muret (42) grâce d'une part à l'adjonction de roues pleines (344) sous les pieds avant (345) du châssis (340) et d'autre part à l'adjonction de roues à gorge (346) sous les pieds arrières (347).

Pour faciliter le nettoyage, l'entretien et la longévité, la structure du séparateur de phase (330) est réalisée en acier inoxydable.

Le séparateur de phase objet de la présente invention a été décrit dans une application mettant en oeuvre un procédé de traitement des résidus biologiques spécifique.

Il doit être compris que ce séparateur de phase pourra être utilisé pour d'autres procédés de traitement sans qu'il soit nécessaire pour l'homme de l'art de faire oeuvre d'activité inventive.

## Revendications

1. Procédé de traitement de résidus biologiques (1), tels que les déjections, les litières, les fumiers, les lisiers ou autres, caractérisé en ce qu'il comporte successivement les étapes de :
(10) - introduction régulière d'un produit bactérien (2) comprenant une ou plusieurs bactéries dans les résidus biologiques (1), sur le site d'élevage, afin de former un mélange (11);
(20) - traitement des résidus biologiques (1) par ledit produit bactérien (2) ;
(30) - tamisage en douceur du mélange (11) et séparation du mélange (11) en une phase solide (31) et une phase liquide (32) ; et
(40) - compostage de la phase solide (31) en un compost inodore.

2. Procédé de traitement de résidus biologiques (1) selon la revendication 1, caractérisé en ce qu'il comporte en outre une étape (50) de décantation rapide de la phase liquide (32) en un décantât solide (51) et un jus de décantation (52).

3. Dispositif pour la mise en oeuvre du procédé selon la revendication 1 ou la revendication 2, du type comportant un séparateur de phase (330) à châssis vibrant (360), caractérisé en ce qu'il comporte deux tamis inclinés, un tamis supérieur (370), et un tamis inférieur (371) plus fin que le tamis supérieur (370) disposés l'un au-dessus de l'autre sur le châssis vibrant (360).

4. Dispositif selon la revendication 3, caractérisé en ce que ledit châssis vibrant (360) comporte des fentes (361) pour permettre le réglage de l'inclinaison des tamis (370,371).

5. Dispositif selon la revendication 3 ou la revendication 4, caractérisé en ce que le tamis supérieur (370) retient toutes les particules dont la taille est supérieure à 400 µm et le tamis inférieur (371) retient toutes les particules dont la taille est supérieure à 100µm.

6. Dispositif selon l'une quelconque des revendications 3 à 5, caractérisé en ce que ledit châssis vibrant (360) comporte des glissières (362) pour le maintien des tamis (370,371).

7. Dispositif selon l'une quelconque des revendications 3 à 6, caractérisé en ce que ledit séparateur de phase (330) comporte un répartiteur (380) de mélange (11).

8. Dispositif selon l'une quelconque des revendications 3 à 7, caractérisé en ce que ledit séparateur de phase (330) comporte un convoyeur à bande (390) pour évacuer la phase solide (31).

9. Dispositif selon l'une quelconque des revendications 3 à 8, caractérisé en ce que ledit séparateur de phase (330) monté sur le châssis (340) est mobile suivant un muret (42).
